# EUROPEAN PATENT APPLICATION

(11) **EP 2 369 893 A1**
(43) Date of publication of application: **28.09.2011**
(21) Application number: 10290136.0
(22) Date of filing: 16.03.2010
(51) Int. Cl.: H04W 88/10, G06F 9/46, H04W 72/04

(54) **Access device and method of operating an access device**

(71) Applicant: Alcatel Lucent, 75008 Paris (FR)
(72) Inventor: Torsten Fahldieck, 71254 Ditzingen (FR)
(74) Representative: Schäfer, Wolfgang

(57) **Abstract**

The invention relates to an access device (100) comprising an access interface (110) for establishing access data communications (110a) with at least one further device (200), a backhaul interface (120) for establishing backhaul data communications (120a) with a backhaul network (300), and processing means (130) configured to control said access data communications (110a) with said at least one further device (200) and said backhaul data communications (120a) with said backhaul network (300). Said processing means (130) are configured to implement one or more instances (I) of a virtual access device (140), each instance (I) of said virtual access device (140) being configured to control at least a portion of said access data communications (110a) with said at least one further device (200) and/or said backhaul data communications (120a) with said backhaul network (300).

## Description

### Field of the Invention

The invention relates to an access device comprising an access interface for establishing access data communications with at least one further device and a backhaul interface for establishing backhaul data communications with a backhaul network.

The invention further relates to a method of operating an access device.

### Background

Access devices are e.g. used in cellular wireless communications networks to establish a data communications link between mobile terminals such as mobile phones and a backhaul network. To extend the coverage of wireless communications networks, it has been proposed to increase the number of access devices. However, in many cases, true improvements in wireless coverage may only be achieved if additional access devices are placed in locations that are under the administrative control of private persons or companies, in contrast to public locations or the premises of an operator of the communications network. This leads to security problems because an access device so deployed is prone to manipulation due to the possibility of physical access to the device by third parties.

Consequently, it is an object of the present invention to provide an improved access device and an improved method of operating an access device which overcomes the above explained security issue.

### Summary

According to one embodiment, this object is achieved by an access device comprising an access interface for establishing access data communications with at least one further device, a backhaul interface for establishing backhaul data communications with a backhaul network, and processing means configured to control said access data communications with said at least one further device and said backhaul data communications with said backhaul network, wherein said processing means are configured to implement one or more instances of a virtual access device, each instance of said virtual access device being configured to control at least a portion of said access data communications with said at least one further device and/or said backhaul data communications with said backhaul network.

Each instance of the virtual access devices may advantageously provide access to the backhaul network independently of the operation of other instances of said virtual access devices. E.g., apart from sharing the same physical interfaces and the processing means of the access device, various instances of the virtual access devices may be considered as separate, autonomous access devices. The virtual access devices may e.g. be used instead of a plurality of real, i.e. physical, conventional access devices in such application scenarios where a strict separation of the operation of the plurality of access devices is desired.

A further solution is given by a method of operating an access device comprising an access interface for establishing access data communications with at least one further device, a backhaul interface for establishing backhaul data communications with a backhaul network, and processing means configured to control said access data communications with said at least one further device and said backhaul data communications with said backhaul network, wherein said processing means implement one or more instances of a virtual access device, each instance of said virtual access device being configured to control at least a portion of said access data communications with said at least one further device and/or said backhaul data communications with said backhaul network.

Further advantageous embodiments are given by the dependent claims.

### Brief Description of the Figures

Further aspects, features and embodiments of the present invention are given in the following detailed description with reference to the drawings, in which:
- Figure 1: schematically depicts a first embodiment of an access device,
- Figure 2: depicts a simplified block diagram of a virtual access device according to one embodiment,
- Figure 3: depicts a second embodiment of the access device,
- Figure 4: depicts a communications scenario including a further embodiment of the access device, and
- Figure 5: depicts a simplified flow chart of an embodiment of a method of operating an access device.

### Description of the Embodiments

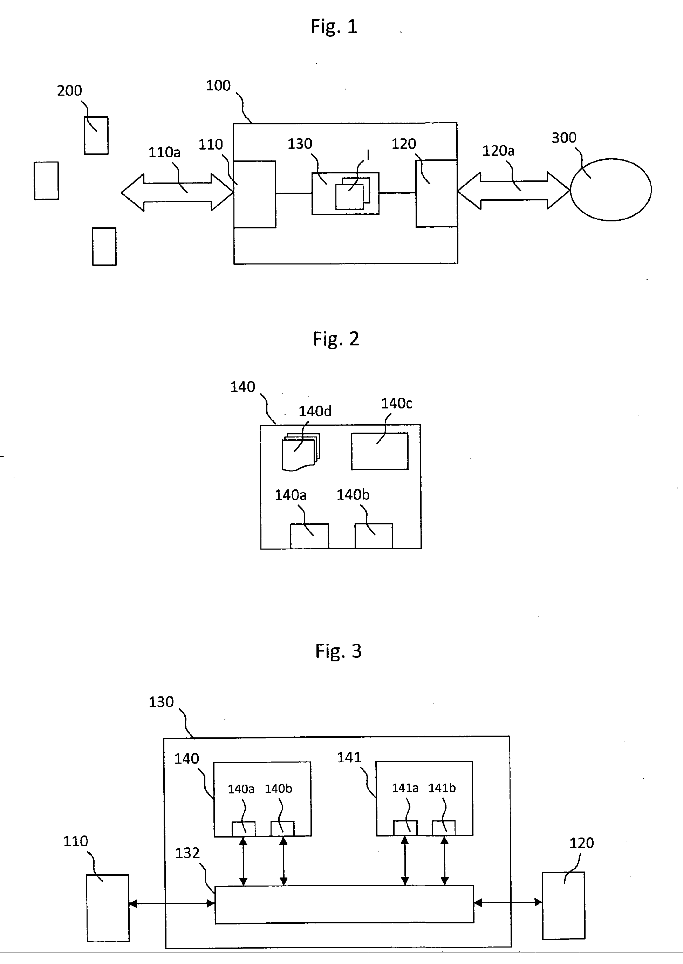

Figure 1 schematically depicts a first embodiment of an access device 100. The access device 100 comprises an access interface 110 for establishing access data communications 110a with at least one further device 200, which may e.g. represent a communications terminal of an end user. According to a preferred embodiment, the access interface 110 is a wireless interface which is configured to operate according to at least one of the communications standards comprising: Global System for Mobile Telecommunications, GSM, Universal Mobile Telecommunications System, UMTS, Long Term Evolution, LTE, IEEE 802.11a/b/g/n, IEEE 802.15, IEEE 802.16. Correspondingly, the further device 200 may be a wireless terminal supporting one or more of the above listed wireless communications standards.

According to a further embodiment, the access interface 110 may alternatively or additionally be configured for wired data transmission, e.g. forming part of a local area network (LAN).

In addition to the access interface 110, the access device 100 depicted by Figure 1 comprises a backhaul interface 120 for establishing backhaul data communications 120a with a backhaul network 300. According to a preferred embodiment, said backhaul interface 120 is configured to operate according to at least one of the communications standards comprising: Asymmetric Digital Subscriber Line (ADSL), Very High Speed Digital Subscriber Line (VDSL). Alternatively or in addition thereto, the backhaul interface 120 may also support wireless data communications with the backhaul network 300.

The operation of the access interface 110 and the backhaul interface 120 is controlled by processing means 130 of the access device 100. The processing means may comprise calculation means such as a central processing unit (CPU) or a microprocessor or a digital signal processor (DSP) or the like and supporting peripheral components such as memory means (e.g., random access memory (RAM), read only memory (ROM)), data communication links to the interfaces 110, 120, and further peripheral components known in the art. The processing means 130 may be implemented partly or fully in software running on a conventional processor unit, specialized hardware or any combination thereof. It is also possible to employ field-programmable gate array (FPGA) systems to implement the functionality of the processing means 130.

In contrast to conventional systems, the present embodiment of the access device 100 as depicted by Figure 1 comprises specifically configured processing means 130 which are configured to implement one or more instances I of a virtual access device 140, cf. Figure 2. Each instance I (Figure 1) of said virtual access device 140 is configured to control at least a portion of said access data communications 110a with said at least one further device 200 and/or said backhaul data communications 120a with said backhaul network 300.

Thus, the processing means 130 according to the present embodiment can advantageously provide the functionality of a plurality of physical access devices although only requiring the hardware equipment 100, 110, 120, 130 of a single "real", e.g. physical, access device 100. According to a preferred embodiment, each instance I of virtual access devices 140 (Figure 2) is configured to provide about the same access device functionality as a conventional physical access device.

The virtualization of access devices provided for by the processing means 130 has several advantages:
Each instance I of the virtual access devices 140 may provide access to the backhaul network 300 independently of the operation of other instances of said virtual access devices 140. E.g., apart from sharing the same physical interfaces 110, 120 and the processing means 130 of the access device 100 according to the present embodiment, the various instances I of the virtual access devices 140 may be considered as separate, autonomous access devices. The virtual access devices 140 may e.g. be used instead of a plurality of real, i.e. physical conventional access devices in such application scenarios where a strict separation of the operation of the plurality of access devices is desired.

Moreover, the virtual access devices 140 may be dynamically configured by said processing means 130 regarding their operation and resource usage. Thus, it is advantageously possible to grant hardware and/or software resources of the processing means 130 or even interface usage of the interfaces 110, 120 to a specific virtual access device depending on its actual resource requirements, whereby a more efficient operation is realised.

According to a preferred embodiment, said processing means 130 comprise hypervisor means 132, Figure 3, which are configured to initiate and control the instances I of said virtual access device. As an example, Figure 3 schematically depicts two instances of virtual access devices 140, 141.

According to a further preferred embodiment, the hypervisor means 132 are configured to schedule an access of said virtual access devices 140, 141 to said access interface 110 and said backhaul interface 120. Thus, the hypervisor guarantees that there are no resource conflicts between the several virtual access devices 140, 141 which share the physical interfaces 110, 120. Moreover, this scheduling is a further measure to ensure the strict separation between different virtual access devices 140, 141 in that a second virtual access device 141 may not compromise an ongoing data communication between a first virtual access device 140 and an interface 110, 120.

According to a further preferred embodiment, at least one virtual access device 140, 141 is configured to establish a virtual private network, VPN, connection to a remote device via said backhaul interface 120, which enables secure communication between the respective access device 140, 141 and e.g. a central office of an operator of the access device 100.

Preferably, at least one virtual machine 140, 141 comprises a virtual access interface 140a, 141a for controlling at least a portion of said access data communications 110a (Figure 1) which is associated with said virtual machine 140, 141. In analogy, preferably at least one virtual machine 140, 141 comprises a virtual backhaul interface 140b, 141b for controlling at least a portion of said backhaul data communications 120a (Figure 1) which is associated with said virtual machine / virtual access device 140, 141.

A further measure to ensure a strict separation between different virtual access devices 140, 141 provides that a virtual access device 140, 141 accesses said access interface 110 or said backhaul interface 120 only via said hypervisor means 132. I.e., a direct access or interface between the virtual access devices 140, 141 and the physical interfaces 110, 120 is not enabled or provided for, respectively.

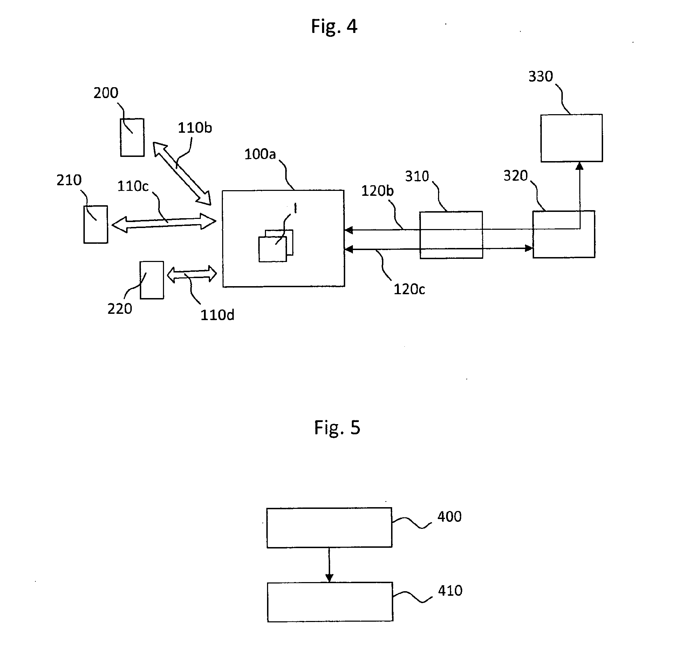

An efficient control and monitoring of an access device 100, 100a according to the embodiments is given by a mechanism for remotely controlling said hypervisor means 132 and/or at least one virtual access device 140, 141 by a remote device 330 (Figure 4) which is external to said access device 100. The remote device 330 may e.g. be located at an operator's central office (CO) and may be configured to establish a secure data connection 120b such as a VPN connection to the respective access device 100a via the backhaul network 310.

According to a further embodiment, said processing means 130 may also encrypt program memory and/or data memory associated with a virtual access device 140, 141 to increase a level of operational security.

Figure 5 depicts a simplified flow chart of an embodiment of a method of operating an access device 100, cf. Figure 1. In a first step 400, the processing means 130 of the access device 100 implement several instances I of a virtual access device 140, 141. In a second step 410, the several instances I of virtual access devices 140, 141 are operated independently of each other, whereby a corresponding number of real, i.e. physical access devices may be emulated although only requiring one set of access device hardware and/or software components.

According to a particularly preferred embodiment, the access device 100, 100a can be employed to provide the functionality of a so-called Femto base station or Femto access point, respectively.

Femto base stations and Femto access points both offer the basic functionality of an access device in that they enable data communications between wireless terminals 200 (Figure 1) and a backhaul network 300. For this purpose, Femto base stations and Femto access points are equipped with an access interface 110 enabling wireless data communications with the terminals 200.

Femto base stations and Femto access points can be installed to improve the existing and future wireless networks, since they add further radio cells to the existing infrastructure. The radio cells provided by Femto base stations and Femto access points are usually comparatively small thus being well suited to cover small areas with poor radio coverage such as indoor settings and the like.

More specifically, Femto base stations and Femto access points differ in the type of the wireless access interface 110. While Femto base stations are equipped with a 3G or 4G interface like UMTS, LTE or WiMAX, a Femto access point is e.g. equipped with a WiFi interface based on the IEEE 802.11 standard.

The backhaul interface 120 of a Femto access device (Femto access point or Femto base station) towards the network 300 may be any wireline technology like xDSL (e.g., ADSL, VDSL, and the like), broadband cable, optical fiber ("fiber to the home", FTTH) or a wireless backhaul technology or a combination thereof.

As already mentioned, both types of Femto access devices may be used to improve existing wireless networks. A wireless network may be enhanced by the installation of Femto base stations to extend the coverage of the wireless network or to enhance the throughput especially for indoor purposes. WiFi-based Femto access points may be used to extend a public wireless network with the capability of an additional wireless technology, especially the provisioning of further resources for non real time data transfer.

Since Femto access devices will mainly be installed in residential areas, the following security problem may arise: A Femto access device may be operated in a residential area under the administrative control of a private user/business. The main issue is that Femto access devices so deployed in most cases are required to simultaneously operate in a residential user domain and in a public network operator domain. The installation of the Femto access device in a residential area (e.g., at a private user's premises) would give the private user full access to the hardware and software of such a device. This is a serious security problem for a public network operator, because such a Femto access device would also be a logical and administrative part of its own network. A residential user could disadvantageously manipulate the hardware or software of such a Femto access device and achieve control over the Femto access device. Furthermore the user could infiltrate the network of the wireless network operator.

The embodiments of the present invention offer a sophisticated solution for the above explained security issue related to the deployment of (Femto) access devices under administrative control of private parties.

The access device virtualization offered by the access device 100, 100a and its processing means 130 enables to implement two separate virtual access devices 140, 141 (Figure 3) both of which are hosted on one physical device, i.e. the access device 100, 100a according to the embodiments. Said two separate virtual access devices 140, 141 may advantageously implement the functionality of two separate Femto access devices operating independently of each other thus overcoming the security issues detailed above.

According to an embodiment, the proposed access device 100, 100a comprises processing means 130 (Figure 3) comprising at least one CPU that supports a virtualization technique. Moreover, hypervisor means 132 are provided which are preferably implemented in the form of software offering the functionality of an operating system. Such functionality e.g. comprises device drivers for communicating with the interfaces 110, 120. The device driver functionality is symbolized by the double arrows of Figure 3 connecting the hypervisor means 132 with the interfaces 110, 120.

Preferably, only the hypervisor means 132 have direct access to any hardware component of the access device 100, 100a. This particularly holds true for an access to the access interface 110 and the backhaul interface 120.

To provide the functionality of two Femto access devices, Figure 3 exemplary depicts two virtual access devices 140, 141 which are under control of the hypervisor means 132. Each virtual access device 140, 141 preferably runs one instance of an operating system 140c (Figure 2) together with all device drivers 140a, 140b and applications 140d which are necessary for the operation of a virtual Femto access device 140, 141. As far as the operating system 140c and the applications 140d are considered, a virtual access device 140, 141 is similar to a conventional real, physical access device.

The operating system 140c of each virtual access device 140, 141 has access to the physical access interface 110 and the physical backhaul interface 120 of the access device 100 (Figure 1) via its own virtual device drivers 140a, 140b, wherein a communication between the virtual device drivers 140a, 140b, 141a, 141b and the interfaces 110, 120 is controlled by the hypervisor means 132.

According to a preferred embodiment, a first virtual access device 140 is exclusively reserved for a public network operator domain, and a second virtual access device 141 is exclusively reserved for a residential domain, i.e. operation by a private user. Thus, according to the embodiment of Figure 4, a private user may use the access device 100a for accessing a public Internet 320 with his terminals 210, 220, wherein access connections 110c, 110d with the respective second virtual access device 141 (Figure 3) are established. The corresponding backhaul communications are symbolized by the double arrow 120c. The second virtual access device 141 controls a data communication between the user's terminals 210, 220 and the backhaul interface 120 (Figure 1).

At the same time, the first virtual access device 140 may be operated and controlled by a public network operator. Correspondingly, access connections 110b (Figure 4) between terminals 200 of the operator's customers and the backhaul network 310 are established by the first virtual access device 140. The corresponding backhaul communications are symbolized by the double arrow 120b.

Since both virtual access devices 140, 141 are strictly separated by each other by means of the virtualization, there is no possibility for the user of the terminals 210, 220 to manipulate the communication handled by the first virtual access device 140 for the public network operator. This even applies to cases where the access device 100a is physically located at a place under control of the user, because access to the first virtual access device 140 is controlled and protected by the hypervisor means 132 which are only very difficult - if not impossible at all - to be manipulated.

The hypervisor means 132 control and schedule the access of the virtual access devices 140, 141 to the common resources, particularly the hardware resources 110, 120 of the access device 100, 100a. With this configuration a clear separation between private and public operator domain can be achieved. Every domain runs its own virtual access device 140,141. Hence, by deploying only one hardware device 100, 100a, the functionality of a plurality of different access devices 140, 141 may be provided, thus enabling to efficiently improve radio coverage of wireless networks, e.g. by means of introducing Femto access devices based on the embodiments.

As already explained above, Figure 3 depicts the processing means 130 of an access device 100, 100a according to an embodiment. Preferably, the hypervisor means 132 are implemented as software and are the only software component which has access to the hardware of the access device 100, 100a. The hypervisor means 132 operate comparable to a minimized operating system for the processing means 130 and particularly control and supervise all access from the virtual access devices 140, 141 to the hardware 110, 120 of the access device 100. The hypervisor means 132 also initiate and control an operation of the virtual access devices 140, 141, e.g. by dynamically assigning resources such as memory, processing time of the CPU, access to the physical interfaces 110, 120.

According to one embodiment, the hypervisor means 132 generate and control two virtual access devices 140, 141, wherein the first device 140 is for the private domain and the second device 141 is for the public domain. Basically, a virtual access device 140, 141 offers the same functionality as a physical access device as far as a control of data communications between the access interface 110 and the backhaul interface 120 is concerned.

Preferably, inside a virtual machine embodied by the virtual access devices 140, 141 an operating system 140c is running together with its applications 140d, cf. Figure 2. The operating system 140c accesses the interfaces 110, 120 via its virtual device drivers 140a, 140b. Corresponding requests of the virtual device drivers 140a, 140b are scheduled by the hypervisor means 132, which also supervise the access to the interfaces 110, 120.

According to an embodiment, a boot procedure of the access device 100a of Figure 4 performs as follows:
- Initiation of the hardware (RAM, peripheral interfaces 110, 120) and the hypervisor means 132 (Figure 3)
- The hypervisor means 132 initiate two virtual access devices 140, 141
- Setup of first virtual access device 140 for a private domain,
- Operating system bootstrap and initialization of a virtual environment for the device 140
- Setup of second virtual access device 141 for a public, i.e. operator controlled, domain,
- Initiation of a secured environment
- Initiation of a virtual private network VPN connection 120b (Figure 4) to the operator network 330 via the backhaul interface 120 (Figure 3)
- Operating system bootstrap via VPN connection 120b and initialization of the virtual environment for the device 141

According to a further embodiment, the following functions and configurations may be implemented with the access device 100a to prevent an unauthorized person such as a private user from compromising the security of the access device 100a:
- No user access to the hypervisor 132
- No user access to the virtual access device 141 which hosts the operator controlled domain.
- User access is restricted only to the private virtual access device 140
- Remote control of the hypervisor means 132 and virtual access device 141 via the backhaul interface 120 by the network operator
- Data transfer between secured virtual access device 141 and public operator network 310 via VPN (virtual private network e.g. IPSEC)
- Periodic integrity check of the code and data in the secured domain of the virtual access device 141 by electronic certificates, verification of certificates remotely by the network operator
- Virtualization supported by hardware of the processing means 130 (features similar or equivalent to "Intel VT" or "AMD-V")
- Memory (program and data) encryption of virtual machines

The functional separation of different access devices 140, 141 by virtualization, as proposed by the embodiments, significantly simplifies security mechanisms of the access device 100. Separate virtual access devices 140, 141 can be optimally secured against each other.

The resources of the physical access device 100 like bandwidth of network interfaces 110, 120, CPU power and memory usage can be flexibly shared between the two virtual access devices 140, 141.

From a logical perspective of the backhaul network 300 (Figure 1), two individual network nodes - represented by the virtual devices 140, 141 - are "seen" and can be individually controlled and configured like regular physical network nodes.

A network operator has full control over his virtual access device 141, and a residential user has full control over his virtual access device 140. For instance, an access device 100a may be used by a private user at his premises the way conventional WLAN-routers are used for enabling a wireless connection of private terminals 220 to the Internet 320, Figure 4, whereby the communication is handled by the virtual access device 140. Simultaneously, due to the further virtual access device 141, a network operator may implement a Femto access device that may be open to public use.

The proposed principle could furthermore be used for sharing of public wireless networks, wherein an access network operator leases virtual base stations in form of the virtual access devices 140, 141 to other public network operators.

The number of access points being operated in residential areas which are connected via broadband capable connections to the Internet 320 (e.g., privately operated WLAN access points) increases more and more. All of these privately operated WLAN access points are potential candidates for extending public wireless networks in accordance with the embodiments. Furthermore, Femto base stations according to the embodiments which will be installed in residential areas for extending indoor coverage may be used for public network communication as well as private communication.

The physical access device 100, 100a advantageously operates like two individual network nodes with two individual network (e.g. Internet Protocol, IP) contexts, if two virtual access devices 140, 141 are implemented. Of course, depending on the resources of the processing means 130, more than two virtual access devices may be implemented simultaneously.

The description and drawings merely illustrate the principles of the invention. It will thus be appreciated that those skilled in the art will be able to devise various arrangements that, although not explicitly described or shown herein, embody the principles of the invention and are included within its spirit and scope. Furthermore, all examples recited herein are principally intended expressly to be only for pedagogical purposes to aid the reader in understanding the principles of the invention and the concepts contributed by the inventor(s) to furthering the art, and are to be construed as being without limitation to such specifically recited examples and conditions. Moreover, all statements herein reciting principles, aspects, and embodiments of the invention, as well as specific examples thereof, are intended to encompass equivalents thereof.

## Claims

1. Access device (100) comprising an access interface (110) for establishing access data communications (110a) with at least one further device (200), a backhaul interface (120) for establishing backhaul data communications (120a) with a backhaul network (300), and processing means (130) configured to control said access data communications (110a) with said at least one further device (200) and said backhaul data communications (120a) with said backhaul network (300), wherein said processing means (130) are configured to implement one or more instances (I) of a virtual access device (140), each instance (I) of said virtual access device (140) being configured to control at least a portion of said access data communications (110a) with said at least one further device (200) and/or said backhaul data communications (120a) with said backhaul network (300).

2. Access device (100) according to claim 1, wherein said processing means (130) comprise hypervisor means (132) which are configured to initiate and control the instances (I) of said virtual access device (140).

3. Access device (100) according to claim 2, wherein said hypervisor means (132) are configured to schedule an access of said virtual access devices (140) to said access interface (110) and said backhaul interface (120).

4. Access device (100) according to one of the preceding claims, wherein at least one virtual access device (140) is configured to establish a virtual private network, VPN, connection (120b) to a remote device via said backhaul interface (120).

5. Access device (100) according to one of the preceding claims, wherein at least one virtual access device (140, 141) comprises a virtual access interface (140a, 141a) for controlling at least a portion of said access data communications (110a) which is associated with said virtual machine (140, 141).

6. Access device (100) according to one of the preceding claims, wherein at least one virtual access device (140, 141) comprises a virtual backhaul interface (140b, 141b) for controlling at least a portion of said backhaul data communications (110a) which is associated with said virtual machine (140, 141).

7. Access device (100) according to one of the preceding claims, wherein said access interface (110) and/or said backhaul interface (120) is a wireless interface.

8. Access device (100) according to claim 7, wherein said access interface (110) is configured to operate according to at least one of the communications standards comprising:
- Global System for Mobile Telecommunications, GSM,
- Universal Mobile Telecommunications System, UMTS,
- Long Term Evolution, LTE,
- IEEE 802.11a/b/g/n,
- IEEE 802.15
- IEEE 802.16.

9. Access device (100) according to one of the preceding claims, wherein said backhaul interface (120) is configured to operate according to at least one of the communications standards comprising:
- Asymmetric Digital Subscriber Line, ADSL,
- Very High Speed Digital Subscriber Line, VDSL.

10. Method of operating an access device (100) comprising an access interface (110) for establishing access data communications (110a) with at least one further device (200), a backhaul interface (120) for establishing backhaul data communications (120a) with a backhaul network (300), and processing means (130) configured to control said access data communications (110a) with said at least one further device (200) and said backhaul data communications (120a) with said backhaul network (300), wherein said processing means (130) implement one or more instances (I) of a virtual access device (140), each instance (I) of said virtual access device (140) being configured to control at least a portion of said access data communications (110a) with said at least one further device (200) and/or said backhaul data communications (120a) with said backhaul network (300).

11. Method according to claim 10, wherein said processing means (130) comprise hypervisor means (132) which initiate and control the instances (I) of said virtual access device (140).

12. Method according to claim 11, wherein said hypervisor means (132) schedule an access of said virtual access devices (140) to said access interface (110) and said backhaul interface (120).

13. Method according to one of the claims 11 to 12,
wherein a virtual access device (140, 141) accesses said access interface (110) or said backhaul interface (120) only via said hypervisor means (132).

14. Method according to one of the claims 11 to 13,
wherein said hypervisor means (132) and/or at least one virtual access device (140, 141) are controlled by a remote device (330) which is external to said access device (100).

15. Method according to one of the claims 10 to 14,
wherein said processing means (130) encrypt program memory and/or data memory associated with a virtual access device (140, 141).
